# EUROPEAN PATENT APPLICATION

(11) **EP 4 797 646 A1**
(43) Date of publication of application: **26.08.2026**
(21) Application number: 24890590.3
(22) Date of filing: 08.11.2024
(51) Int. Cl.: H04L 43/02

(54) **EXPERIENCE ISSUE DELIMITATION METHOD, DEVICE, AND SYSTEM**

(30) Priority: 16.11.2023 CN 202311540168
(71) Applicant: HUAWEI TECHNOLOGIES CO., LTD., Shenzhen 518129 (CN)
(72) Inventor: HAN, Shuo, Shenzhen, Guangdong 518129 (CN); KUAI, Shaofeng, Shenzhen, Guangdong 518129 (CN); ZHANG, Yunfei, Shenzhen, Guangdong 518129 (CN)
(74) Representative: Goddar, Heinz J.
(86) International application number: PCT/CN2024/130955
(87) International publication number: WO 2025/103234

(57) **Abstract**

An experience issue demarcation method, an apparatus, and a system, relating to the field of communication technologies, are disclosed, to resolve a problem that when experience issue analysis includes coarse demarcation of an experience issue, a specific root cause issue object cannot be demarcated due to an excessively large demarcation scope, and a demarcation analysis scope is incomplete, such that an optimization policy for resolving the experience issue cannot be formulated, and user experience cannot be improved. The method includes: A cross-domain MDAS obtains first information that indicates information about an experience degradation event, a service access amount, and a service topology of the experience degradation event, performs experience issue demarcation based on the first information, determines an issue object and a root cause of the issue object, and then sends an analytics report to a subscription consumer. The root cause of the issue object is determined by a single-domain MDAS based on second information, and then the single-domain MDAS sends the root cause of the issue object to the cross-domain MDAS. The solutions of this application may be widely applied to the field of communication technologies, artificial intelligence, internet of vehicles, internet of smart home, and the like.

## Description

This application claims priority to Chinese Patent Application No. 202311540168.7, filed with the China National Intellectual Property Administration on November 16, 2023 and entitled "EXPERIENCE ISSUE DEMARCATION METHOD, APPARATUS, AND SYSTEM", which is incorporated herein by reference in its entirety.

### TECHNICAL FIELD

This application relates to the communication field, and in particular, to an experience issue demarcation method, an apparatus, and a system.

### BACKGROUND

Management data analytics (management data analytics, MDA) brings automation and intelligence to network service management and orchestration by employing artificial intelligence (artificial intelligence, AI) and/or machine learning (machine learning, ML) technologies, and is a key promoter of automation and intelligence. MDA functions include service experience analysis (service experience analysis) and coverage related analysis (coverage related analytics), and the like. The service experience analysis is used for experience issue analysis, experience issue statistics, experience issue prediction, and the like.

The experience issue analysis includes coarse demarcation of an experience issue. For example, the experience issue analysis may be used to coarsely determine that a communication domain that causes the experience issue is a core network domain and/or a wireless network domain. There is a problem that when the experience issue analysis includes coarse demarcation of the experience issue, because a specific root cause issue object cannot be demarcated due to an excessively large and not specific demarcation scope, and a demarcation analysis scope is incomplete, an optimization policy for resolving the experience issue cannot be formulated, and user experience cannot be improved.

### SUMMARY

Embodiments of this application provide an experience issue demarcation method, an apparatus, and a system, to resolve a problem that when experience issue analysis involves coarse demarcation of an experience issue, a specific root cause issue object cannot be demarcated due to an excessively large and non-specific demarcation scope, and a demarcation analysis scope is incomplete, such that an optimization policy for resolving the experience issue cannot be formulated, and user experience cannot be improved.

To achieve the foregoing objective, this application uses the following technical solutions.

According to a first aspect, this application provides an experience issue demarcation method, and an apparatus and system. The method may be performed by a cross-domain management data analytics service (management data analytics service, MDAS) and a functional module or a chip in the cross-domain MDAS. Using execution by the cross-domain MDAS as an example, the method includes: A cross-domain MDAS obtains first information that indicates information about an experience degradation event, a service access amount, and a service topology of the experience degradation event, performs experience issue demarcation based on the first information, determines an issue object and a root cause of the issue object, and then sends, to a subscription consumer, an analytics report indicating the issue object and/or the root cause of the issue object. The experience degradation event includes an event that occurs during an event of service access performed via a current carrier network and that has an experience issue, and the experience issue includes that access experience does not meet a preset experience requirement; the service access amount includes a total quantity of accesses, via the current carrier network, to a same service as a service to which the experience degradation event belongs; and the service topology of the experience degradation event indicates a communication network topology during user access to the experience degradation event, the communication network topology includes a plurality of communication domains, and each communication domain includes at least one communication node.

According to the method in the first aspect, the cross-domain MDAS may determine, based on the first information, a communication domain and/or a communication node that cause/causes the experience issue, and determine the root cause that causes the experience issue. Further, the analytics report is sent to the subscription consumer, to indicate the communication domain and/or the communication node that cause/causes the experience issue and the root cause of the experience issue. In this way, the subscription consumer may formulate, based on the analytics report, an optimization policy for resolving the experience issue, to achieve an objective of improving user experience.

In a possible design, that the cross-domain MDAS performs the experience issue demarcation based on the first information, and determines the issue object and the root cause of the issue object includes: The cross-domain MDAS sends second information to a single-domain MDAS, where the second information is used to determine the root cause of the issue object; and the cross-domain MDAS generates the analytics report based on the root cause that is of the issue object and that is sent by the single-domain MDA.

According to the possible design, the cross-domain MDAS may determine the root cause of the issue object through the single-domain MDAS, and further generate the analytics report based on the root cause of the issue object determined through the single-domain MDAS. The generated analytics report may provide effective support for the subscription consumer by formulating the optimization policy for resolving the experience issue.

In a possible design, that the cross-domain MDAS obtains the service topology of the experience degradation event includes: The cross-domain MDAS obtains the first information; and the cross-domain MDAS obtains the service topology of the experience degradation event based on the first information and a managed communication domain and/or communication node.

According to the possible design, the cross-domain MDAS achieves an objective of obtaining the service topology of the experience degradation event. In addition, the cross-domain MDAS obtains the service topology of the experience degradation event based on the communication domain and/or the communication node that are/is managed by the cross-domain MDAS, and the cross-domain MDAS does not need to obtain the service topology of the experience degradation event from the single-domain MDAS via signaling interaction, thereby reducing processing complexity of the cross-domain MDAS and improving efficiency of obtaining the service topology of the experience degradation event.

In a possible design, that the cross-domain MDAS obtains the service topology of the experience degradation event includes: sending a subscription request to a data source, where the subscription request is used to request the first information from the data source; and receiving a subscription response from the data source, where the subscription response includes the first information.

According to the possible design, the cross-domain MDAS directly obtains the service topology of the experience degradation event from the data source, thereby providing a possible solution for the cross-domain MDAS to obtain the service topology of the experience degradation event, and improving flexibility and diversity of obtaining the service topology of the experience degradation event by the cross-domain MDAS.

In a possible design, the information about the experience degradation event includes at least one of the following: a service type to which the experience degradation event belongs, an identifier of a network slice in which the experience degradation event occurs, an application identifier corresponding to the experience degradation event, an identifier of an area in which the experience degradation event occurs, an identifier of a user to which the experience degradation event occurs, a service topology node of the experience degradation event, or an event type of the experience degradation event. The service access amount includes at least one of the following: a service type, an application identifier, an area identifier, a user identifier, or a service topology node. The single-domain management data analytics service includes at least one of the following: a core network domain management data analytics service or a wireless network domain management data analytics service.

According to the possible design, the cross-domain MDAS may obtain detailed information about the experience degradation event, detailed information about the service access amount, and detailed information about the single-domain management data analytics service, thereby helping the cross-domain MDAS subsequently determine the issue object of the experience issue and/or the root cause of the issue object.

In a possible design, the analytics report includes at least one of the following: an issue domain type, the issue object, or a service experience emulation node, where the issue domain type indicates a type of domain to which the issue object belongs, and includes at least one of a terminal side, a transmission side, a service provider side, a wireless network side, and a core network side; and the service experience emulation node indicates an improvement degree of user experience after the experience issue is resolved.

According to the possible design, the subscription consumer may provide support for resolving the experience issue based on the detailed information included in the analytics report, to formulate the optimization policy for resolving the experience issue, and achieve the objective of improving user experience.

According to a second aspect, this application provides an experience issue demarcation method, and an apparatus and system. The method may be executed by a single-domain MDAS and a functional module or a chip in the single-domain MDAS. Using execution by the single-domain MDAS as an example, the method includes: The single-domain MDAS obtains second information, and determines a root cause of an issue object based on the second information; and then sends the root cause of the issue object to a cross-domain MDAS.

According to the method in the second aspect, the single-domain MDAS may determine the root cause of the issue object based on the obtained second information, and send the determined root cause of the issue object to the cross-domain MDAS. In this way, the cross-domain MDAS can generate an analytics report based on the root cause of the issue object.

According to a third aspect, this application provides a communication apparatus. The communication apparatus may be a cross-domain MDAS, or a chip or a system on chip in the cross-domain MDAS; or may be a functional module that is in the cross-domain MDAS and that is configured to implement the method according to any one of the first aspect or the possible designs of the first aspect. The communication apparatus may implement the functions performed by the cross-domain MDAS in the foregoing aspect or the possible designs, and the functions may be implemented by hardware executing corresponding software. The hardware or the software includes one or more modules corresponding to the functions. For example, the communication apparatus may include a processing unit and a transceiver unit, where
the processing unit is configured to obtain first information, perform experience issue demarcation based on the first information, and determine an issue object and the root cause of the issue object; and
the transceiver unit is configured to send an analytics report to a subscription consumer, and the analytics report indicates the issue object and/or the root cause of the issue object.

Specifically, for related descriptions of the first information, the issue object, the root cause of the issue object, and the analytics report, refer to any one of the first aspect or the possible designs of the first aspect. In addition, for an action performed by each unit of the communication apparatus, refer to any one of the first aspect or the possible designs of the first aspect. Details are not described again.

According to a fourth aspect, this application provides a communication apparatus. The communication apparatus may be a cross-domain MDAS, or a chip or a system on chip in the cross-domain MDAS. The communication apparatus may implement the functions performed by the cross-domain MDAS in the foregoing aspect or the possible designs, and the functions may be implemented by hardware. In a possible design, the communication apparatus includes a processor and a communication interface. The processor and the communication interface are configured to support the communication apparatus in performing the experience issue demarcation method according to any one of the first aspect or the possible designs of the first aspect. In another possible design, the communication apparatus may further include a memory. The memory is configured to store computer-executable instructions and data that are necessary for the communication apparatus. When the communication apparatus runs, the processor executes the computer-executable instructions stored in the memory, so that the communication apparatus performs the experience issue demarcation method according to any one of the first aspect or the possible designs of the first aspect.

According to a fifth aspect, this application provides a communication apparatus. The communication apparatus may be a single-domain MDAS, or a chip or a system on chip in the single-domain MDAS; or may be a functional module that is in the single-domain MDAS and that is configured to implement the method according to any one of the second aspect or the possible designs of the second aspect. The communication apparatus may implement the functions performed by the single-domain MDAS in the foregoing aspect or the possible designs, and the functions may be implemented by hardware executing corresponding software. The hardware or the software includes one or more modules corresponding to the functions. For example, the communication apparatus may include a processing unit and a transceiver unit, where
the processing unit is configured to obtain second information, and determine a root cause of an issue object based on the second information; and
a transceiver unit is configured to send the root cause of the issue object to a cross-domain management data analytics service.

Specifically, for related descriptions of the second information and the root cause of the issue object, refer to any one of the second aspect or the possible designs of the second aspect. In addition, for an action performed by each unit of the communication apparatus, refer to any one of the second aspect or the possible designs of the second aspect. Details are not described again.

According to a sixth aspect, this application provides a communication apparatus. The communication apparatus may be a single-domain MDAS, or a chip or a system on chip in the single-domain MDAS. The communication apparatus may implement the functions performed by the single-domain MDAS in the foregoing aspect or the possible designs, and the functions may be implemented by hardware. In a possible design, the communication apparatus includes a processor and a communication interface. The processor and the communication interface are configured to support the communication apparatus in performing the experience issue demarcation method according to any one of the second aspect or the possible designs of the second aspect. In another possible design, the communication apparatus may further include a memory. The memory is configured to store computer-executable instructions and data that are necessary for the communication apparatus. When the communication apparatus runs, the processor executes the computer-executable instructions stored in the memory, so that the communication apparatus performs the experience issue demarcation method according to any one of the second aspect or the possible designs of the second aspect.

According to a seventh aspect, this application provides a communication system. The communication system includes the communication apparatus provided in the third aspect or the fourth aspect, or the communication system includes the communication apparatus provided in the fifth aspect or the sixth aspect.

According to an eighth aspect, this application provides a computer-readable storage medium. The computer-readable storage medium stores computer instructions. When the computer instructions are run on a computer, the computer is caused to perform the experience issue demarcation method according to any one of the first aspect or the possible designs of the first aspect, or the computer is caused to perform the experience issue demarcation method according to any one of the second aspect or the possible designs of the second aspect.

According to a ninth aspect, this application provides a computer program product. The computer program product includes computer instructions. When the computer instructions are run on a computer, the computer is caused to perform the experience issue demarcation method according to any one of the first aspect or the possible designs of the first aspect, or the computer is caused to perform the experience issue demarcation method according to any one of the second aspect or the possible designs of the second aspect.

For technical effects achieved by any one of the design manners of the third aspect and the fourth aspect, refer to the technical effects achieved by any one of the first aspect or the possible designs of the first aspect. Details are not described again. For technical effects achieved by any one of the design manners of the fifth aspect and the sixth aspect, refer to the technical effects achieved by any one of the second aspect or the possible designs of the second aspect. Details are not described again. For technical effects achieved by any one of the design manners of the seventh aspect to the ninth aspect, refer to the technical effects achieved by any one of the first aspect or the possible designs of the first aspect. Alternatively, for technical effects achieved by any one of the design manners of the seventh aspect to the ninth aspect, refer to the technical effects achieved by any one of the second aspect or the possible designs of the second aspect. Details are not described again.

### BRIEF DESCRIPTION OF DRAWINGS

FIG. 1 is a diagram of an MDA architecture;
FIG. 2 is a diagram of a communication system according to an embodiment of this application;
FIG. 3 is a schematic flowchart of an experience issue demarcation method according to an embodiment of this application;
FIG. 4 is a schematic flowchart of an experience issue demarcation method according to an embodiment of this application;
FIG. 5 is a schematic flowchart of an experience issue demarcation method according to an embodiment of this application;
FIG. 6 is a diagram of a structure of a communication apparatus according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

Before embodiments of this application are described, related technical terms in embodiments of this application are explained and described. It should be noted that, the following explanations and descriptions are intended to facilitate understanding of embodiments of this application, and should not be construed as any limitation on the protection scope claimed in embodiments of this application.

Management data analytics (management data analytics, MDA) brings automation and intelligence to network service management and orchestration by employing artificial intelligence (artificial intelligence, AI) and/or machine learning (machine learning, ML) technologies, and is a key promoter of automation and intelligence. The MDA may perform data processing and data analytics on network management data and provide an analytics output. The analytics output is provided by a management data analytics service (management data analytics service, MDAS) producer to an MDA subscription consumer that requests analytics.

An MDAS is a service disclosed by the MDA, and may be used by the MDA subscription consumer (which may be referred to as a subscription consumer for short). The MDAS may include but is not limited to a management service producer/consumer of network and service management, a network function (network function, NF) (for example, a network data analytics function (network data analytics function, NWDAF)), a self-organizing network (self-organizing network, SON) function, a network and service optimization tool/function, a service experience analysis (service experience analysis, SLS) function, and an application function (application function, AF).

It should be understood that, in this application, the two terms: an MDAS and a management data analytics management service (management data analytics management service, MDA MnS) are equivalent, and are used interchangeably.

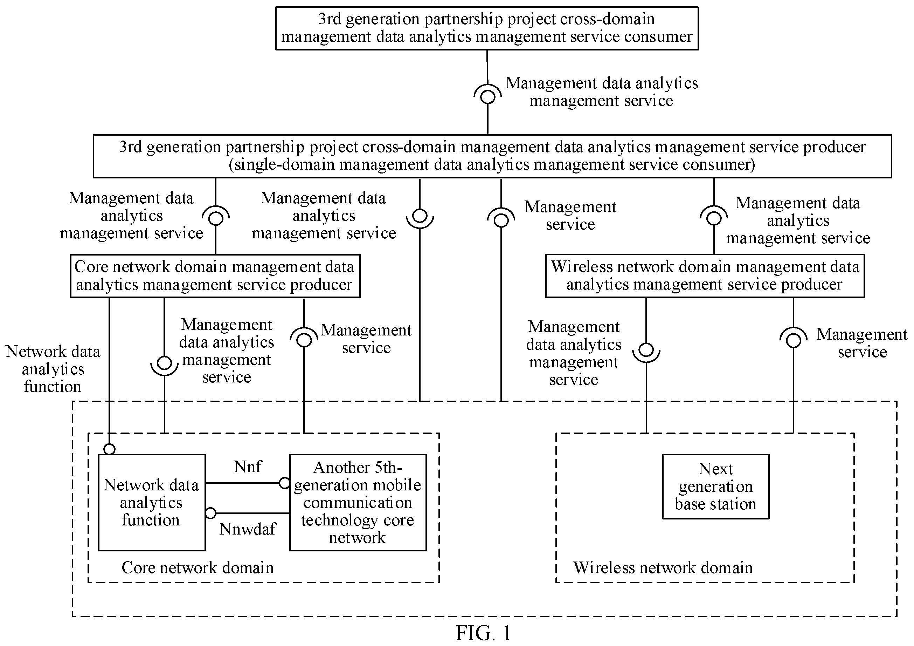

The MDA may perform data analytics on the network management data based on an architecture shown in FIG. 1. As shown in FIG. 1, the network architecture includes a 3rd generation partnership project (3rd generation partnership project, 3GPP) cross-domain management data analytics management service consumer (cross-domain MDA MnS consumer), a 3GPP cross-domain management data analytics management service producer (cross-domain MDA MnS producer), a core network domain management data analytics management service producer (core network domain MDA MnS producer, CN-domain MDA MnS producer), a wireless network domain management data analytics management service producer (radio access network domain MDA MnS producer, RAN-domain MDA MnS producer), an NWDAF, another 5th-generation mobile communication technology core network function (another 5th-generation mobile communication technology core network function, another 5GC NF), and a next generation base station (the next generation NodeB, gNB).

The 3GPP cross-domain MDA MnS consumer (referred to as an MDA subscription consumer and/or a subscription consumer for short) may exchange data with the 3GPP cross-domain MDA MnS producer via an MDA MnS node, uses an MDA MnS generated by the 3GPP cross-domain MDA MnS producer, and accesses an analytics output.

The 3GPP cross-domain MDA MnS producer may exchange data with a single-domain MDA MnS producer (for example, a RAN-domain MDA MnS producer and/or a CN-domain MDA MnS producer) via an MDA MnS node, uses an MDA MnS provided by the single-domain MDA MnS producer (for example, the RAN-domain MDA MnS producer and/or the CN-domain MDA MnS producer), and generates an MDA MnS that can be used by the 3GPP cross-domain MDA MnS consumer.

It should be understood that, the 3GPP cross-domain MDA MnS producer may establish an analytics output of the 3GPP cross-domain MDA MnS producer on an analytics output of an MDA MnS producer in one or more domains.

The CN-domain MDA MnS producer may exchange data with the NWDAF and the another 5GC NF, to receive network management data. Correspondingly, the CN-domain MDA MnS producer may use services provided by the NWDAF and the another 5GC NF to analyze the network management data.

The RAN-domain MDA MnS producer may exchange data with a RAN, to receive the network management data. Correspondingly, the RAN-domain MDA MnS producer may use a service provided by the gNB to analyze the network management data.

The NWDAF is a data perception analysis network element. The 3GPP defines that the NWDAF may collect original data from an NF, an AF, and an operation administration and maintenance (operation administration and maintenance, OAM), perform intelligent analysis on the original data, and output and provide analytics data for the NF, the AF, and the OAM for network and service optimization. In addition, the NWDAF may also collect information such as network performance, service load in a specific area, and user service experience, and use a reliable network performance analysis and prediction model to evaluate and analyze different types of services, determine an internal association between service quality of experience (quality of experience, QoE) and a service path, and optimize 5G edge computing. It should be understood that, the CN-domain MDA MnS producer and/or the 3GPP cross-domain MDA MnS producer may also use an analysis result generated by the NWDAF as an input.

The another 5GC NF is configured to provide the network management data for the CN-domain MDA MnS producer, and includes an access and mobility management function (access and mobility management function, AMF) network element, a session management function (session management function, SMF) network element, a policy control function (policy control function, PCF) network element, and the like.

The gNB is for data transmission between a terminal and a wireless network, and provides the network management data for the RAN-domain MDA MnS producer.

The MDA has the following functions: coverage related analytics (coverage related analytics), service experience analysis (Service experience analysis), MDA-assisted fault management (MDA-assisted fault management), MDA-assisted energy saving (MDA-assisted energy saving), MDA-assisted mobility management (MDA-assisted mobility management), and MDA-assisted critical maintenance management (MDA-assisted critical maintenance management).

The service experience analysis function is used to analyze user service experience. Specific analysis capabilities include experience issue analysis, experience issue statistics, and experience issue prediction. An experience issue means that access experience of the MDA subscription consumer does not meet a preset requirement. Specifically, the experience issue analysis includes but is not limited to performing coarse demarcation on the experience issue in a core network domain and a wireless network domain. To be specific, the experience issue analysis may be used to identify a communication domain that causes the experience issue as the core network domain and/or the wireless network domain, and issue analysis on a terminal side, a transmission side, and a service provider (service provider, SP) side is not identified. As a result, an issue analysis scope is incomplete.

In addition, when the experience issue is coarsely demarcated in the core network domain and/or the wireless network domain through the experience issue analysis, if a communication node (for example, a user plane network element or a base station) that causes the experience issue is not accurately identified, a corresponding optimization policy cannot be formulated for the experience issue. In other words, an objective of resolving or mitigating the experience issue cannot be achieved as a subsequent optimization and closure logic cannot be supported.

To resolve a problem that coarse demarcation of the experience issue cannot support the subsequent optimization and closure logic, this application provides an experience issue demarcation method. The method includes: A cross-domain MDAS obtains first information that indicates information about an experience degradation event, a service access amount, and a service topology of the experience degradation event, performs experience issue demarcation based on the first information, determines an issue object and a root cause of the issue object, and then sends an analytics report to a subscription consumer. The root cause of the issue object is determined by a single-domain MDAS based on second information, and further, the single-domain MDAS sends the root cause of the issue object to the cross-domain MDAS. In this way, the experience issue can be demarcated based on the information about the experience degradation event, the service access amount, and the service topology of the experience degradation event, so that reference factors for experience issue demarcation are more comprehensive, a demarcation granularity is refined, and accuracy of experience issue demarcation is improved.

The following describes the experience issue demarcation method provided in embodiments of this application with reference to the accompanying drawings in this specification.

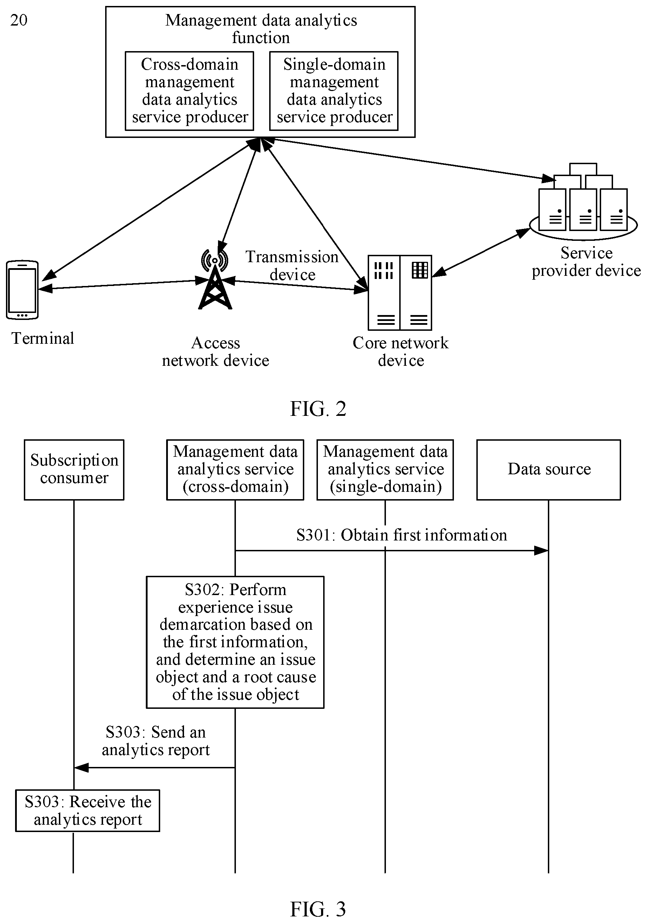

The technical solutions in embodiments of this application may be applied to various communication systems. The communication system may be a 3rd generation partnership project (3rd generation partnership project, 3GPP) communication system, for example, a long term evolution (long term evolution, LTE) system, or may be a 5th-generation (5th-generation, 5G) mobile communication system, a new radio (new radio, NR) system, a beyond 5G (beyond 5G, B5G) mobile communication system, a future mobile communication system, or a new radio vehicle-to-everything (vehicle-to-everything, NR V2X) system, may be further applied to a system in LTE and 5G hybrid networking, a device-to-device (device-to-device, D2D) communication system, a machine-to-machine (machine-to-machine, M2M) communication system, the internet of things (Internet of Things, IoT), or another future communication system, or may be a non-3GPP communication system. This is not limited. The following describes the experience issue demarcation method provided in this embodiment of this application by using the communication system shown in FIG. 2 as an example.

FIG. 2 is a diagram of a communication system according to an embodiment of this application. As shown in FIG. 2, a communication system 20 includes a terminal, a management data analytics function (management data analytics function, MDAF), an access network device, a core network device, a transmission device, and a service provider device. It may be understood that, devices in the communication system 20 may directly communicate with each other, or may communicate with each other through forwarding by another device. This is not specifically limited in embodiments of this application.

It may be understood that, FIG. 2 is merely a diagram, and does not constitute a limitation on an application scenario of the technical solutions provided in this application. A person skilled in the art should understand that, in a specific implementation process, the communication system 20 may include fewer devices than those shown in FIG. 2, or the communication system 20 may further include another device. In addition, a quantity of devices in the communication system 20 may be determined according to a specific requirement. This is not limited. The following describes devices in the system shown in FIG. 2.

The management data analytics function is used to obtain network management data, and perform data processing and/or data analytics on the obtained network management data. The management data analytics function includes but is not limited to a cross-domain MDAS producer and a single-domain MDAS producer. The cross-domain MDAS producer, which may also be referred to as a cross-domain MDAS for short, is configured to obtain the network management data, perform data processing and/or data analytics on the obtained network management data, and provide an analytics report for a subscription consumer (for example, a terminal user subscribing to an MDA or an NF subscribing to the MDA). The single-domain MDAS producer, which may also be referred to as a single-domain MDAS for short, is configured to obtain the network management data, perform data processing and/or data analytics on the obtained network management data, and generate an MDA MnS that can be used by the cross-domain MDAS producer. The single-domain MDAS producer includes at least one of the following: a core network domain MDA producer or a wireless network domain MDA producer.

The terminal may be terminal equipment (terminal equipment), user equipment (user equipment, UE), a mobile station (mobile station, MS), a mobile terminal (mobile terminal, MT), or the like. Specifically, the terminal may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a smart home terminal, a vehicle-mounted terminal, or the like. In embodiments of this application, an apparatus configured to implement a function of the terminal may be a terminal, or may be an apparatus that can support the terminal in implementing the function, for example, a chip system (like a chip, or a processing system including a plurality of chips) or a modem. The following describes the experience issue demarcation method provided in this embodiment of this application by using an example in which the apparatus configured to implement the function of the terminal is a terminal.

The access network device is mainly configured to implement functions such as resource scheduling, radio resource management, and radio access control of the terminal. Specifically, the access network device may be any node of a small base station, a wireless access point, a transmission reception point (transmission reception point, TRP), a transmission point (transmission point, TP), and another access node. In embodiments of this application, an apparatus configured to implement a function of the access network device may be an access network device, or may be an apparatus that can support the access network device in implementing the function, for example, a chip system (like a chip, or a processing system including a plurality of chips) or a modem (modem). The following describes the experience issue demarcation method provided in this embodiment of this application by using an example in which the apparatus configured to implement the function of the access network device is an access network device.

The core network device is classified into a control plane (control plane function, CP) device and a user plane (user plane function, UP) device. The user plane device is mainly responsible for packet data packet forwarding, quality of service (quality of service, QoS) control, charging information statistics, and the like, and includes a user plane network element (user plane function, UPF). The control plane device is mainly responsible for service process interaction, delivers a data packet forwarding policy, a QoS control policy, and the like to a user plane, and includes a network data analytics function (network data analytics function, NWDAF) network element, an access and mobility management function (access and mobility management function, AMF) network element, a session management function (session management function, SMF) network element, a policy control function (policy control function, PCF) network element, and an application function (application function, AF) network element, a network exposure function (network exposure function, NEF) network element, an authentication server function (authentication server function, AUSF) network element, a network slice selection function (network slice selection function, NSSF) network element, a network function repository function (network exposure function repository function, NRF) network element, and a unified data management (unified data management, UDM) network element.

The service provider (service provider, SP) device is a device managed by a service provider, and is configured to develop or provide, for a user based on a requirement of the user, a service that meets the requirement of the user.

The transmission device is a device that serves a transmission network. As a core of an entire fiber optic network, the transmission network is a network with the highest transmission rate in an entire telecommunication network.

Optionally, each device (for example, the terminal, the access network device, the core network device, the cross-domain MDAS producer, or the single-domain MDAS producer) in FIG. 2 may also be referred to as a communication apparatus, and may be a general-purpose device or a dedicated device. This is not specifically limited in embodiments of this application.

Optionally, a related function of each device in FIG. 2 of this application may be implemented by one device, may be jointly implemented by a plurality of devices, or may be implemented by one or more functional modules in one device. This is not specifically limited in embodiments of this application. It can be understood that, the foregoing function may be a network element in a hardware device, a software function running on dedicated hardware, a combination of hardware and software, or a virtualization function instantiated on a platform (for example, a cloud platform).

The following describes an experience issue demarcation method provided in this embodiment of this application with reference to the communication system shown in FIG. 2. Actions, terms, and the like in the following embodiments may be mutually referenced. Names of messages exchanged between devices, names of parameters in the messages, or the like are merely examples. Other names may alternatively be used during specific implementation. For example, in the following embodiments, "corresponding" may be replaced with "associated" or the like.

FIG. 3 is a schematic flowchart of an experience issue demarcation method according to an embodiment of this application. As shown in FIG. 3, the method may include the following steps.

S301: A cross-domain MDAS obtains first information.

The cross-domain MDAS may be a cross-domain MDAS producer in an MDA functional module, and is configured to perform data processing and/or data analytics on obtained information, and provide an analytics report for a subscription consumer.

The first information may indicate information about an experience degradation event, a service access amount, and a service topology of the experience degradation event.

Specifically, the experience degradation event includes an event that occurs during an event of service access performed via a current carrier network and that has an experience issue, and the experience issue includes that access experience does not meet a preset experience requirement. A carrier is a network service provider, for example, a carrier A. The preset experience requirement may include but is not limited to meeting a basic requirement for access experience of a terminal user. For example, when the terminal user accesses a video service with a resolution of 1920*1080, the preset experience requirement includes but is not limited to keeping a transmission bit rate at 8 Mbps. Therefore, when the transmission bit rate is lower than 8 Mbps, the video service with the resolution of 1920*1080 accessed by the terminal user has an experience issue of unclear video.

The service access amount includes a total quantity of accesses, via the current carrier network, to a same service as a service to which the experience degradation event belongs. For example, when the experience degradation event is unclear video, the total quantity of accesses to the video service via the current carrier network is 200, among which 50 accesses to the video service have the experience issue, resulting in poor quality of video access experience of the terminal user.

The service topology of the experience degradation event indicates a communication network topology during user access to the experience degradation event, the communication network topology includes a plurality of communication domains, and each communication domain includes at least one communication node. In other words, the communication domain may be a logical network including at least one communication node. In this application, the communication domain may be classified into a wireless network domain, a core network domain, a transmission network domain, a terminal side, and an SP side based on functions of the communication domain.

The wireless network domain may be a communication domain responsible for implementing functions such as resource scheduling and radio resource management of a terminal, and includes but is not limited to the following communication nodes: a cell and a base station. The core network domain may be a communication domain responsible for functions such as service procedure interaction, quality of service control, and a data packet forwarding policy, and includes but is not limited to the following communication nodes: a user plane network element, an NWDAF, and an AMF network element. The transmission network domain may be a fiber optic network responsible for data transmission, and includes but is not limited to the following communication node: an optical fiber. The terminal side may be an apparatus responsible for meeting a requirement of the terminal user, and includes but not limited to a smartphone and a tablet computer. The SP side may be an apparatus responsible for providing, for the terminal user based on the requirement of the terminal user, functions such as a service that meets the requirement of the terminal user, and includes but is not limited to the following communication node: an application server.

It should be understood that, the wireless network domain and a wireless network side are equivalent, and may be used interchangeably; the core network domain and a core network side are equivalent, and may be used interchangeably; and the transmission network domain and a transmission network side are equivalent, and may be used interchangeably.

Specifically, the cross-domain MDAS may obtain the first information in any one of the following two manners.

Manner 1: The cross-domain MDAS sends a subscription request to a data source, where the subscription request is used to request the first information from the data source; and then the cross-domain MDAS receives a subscription response from the data source, where the subscription response includes the first information. The first information indicates the information about the experience degradation event, the service access amount, and the service topology of the experience degradation event.

The data source is configured to provide QoE data for the cross-domain MDAS. The QoE data indicates experience and a feeling of the terminal user on a service and/or a network, and may include but is not limited to the information about the experience degradation event, the service access amount, and the service topology of the experience degradation event. Specifically, the data source may include but is not limited to an AF and/or an NWDAF. The AF may be configured to exchange data with another NF, and provide a service for the terminal. The NWDAF may be configured to collect data from another NF and/or a similar program (for example, a program that generates data on demand) through subscription or a request model.

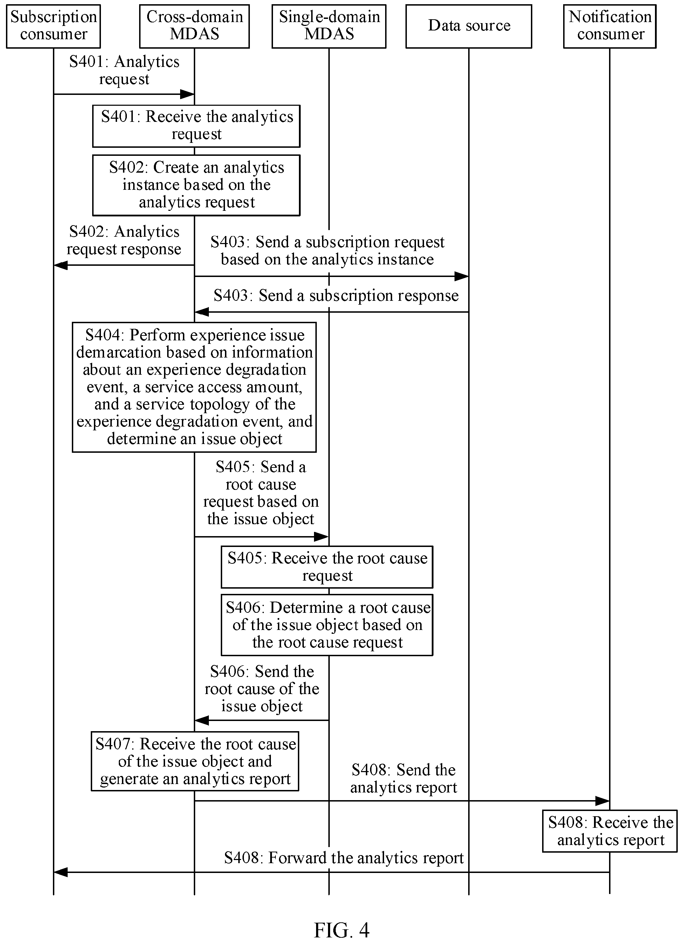

Specifically, for this implementation, refer to the following descriptions of an embodiment corresponding to FIG. 4.

Manner 2: The cross-domain MDAS obtains the information about the experience degradation event and the service access amount; and then the cross-domain MDAS obtains the service topology of the experience degradation event based on the information about the experience degradation event and the service access amount that are obtained, and a managed communication domain and/or communication node, to obtain the first information.

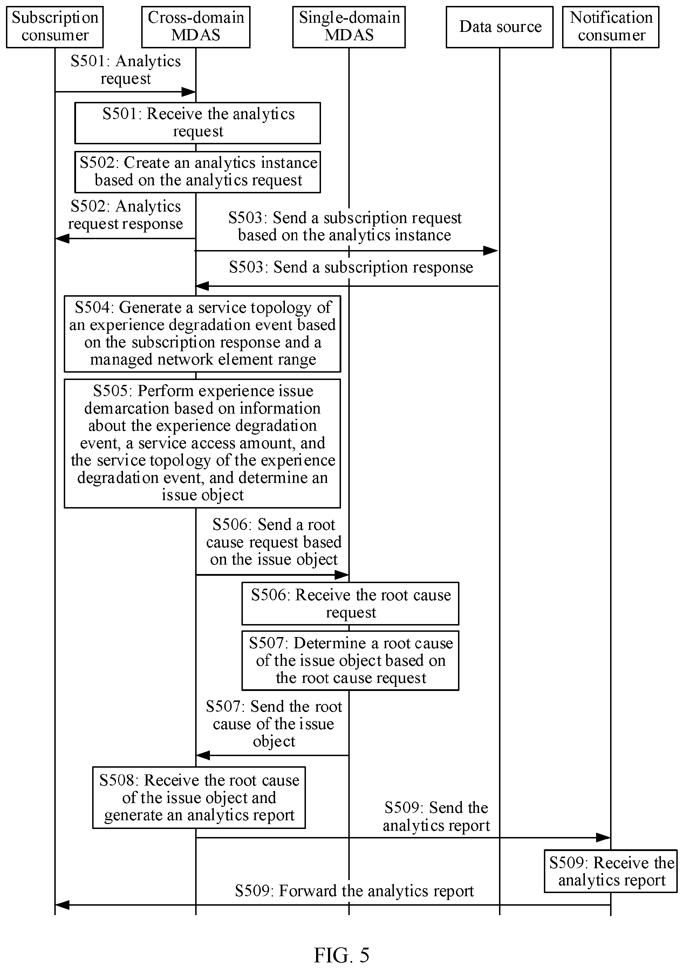

Specifically, for this implementation, refer to the following descriptions of an embodiment corresponding to FIG. 5.

S302: The cross-domain MDAS performs experience issue demarcation based on the first information, and determines an issue object and a root cause of the issue object.

The issue object may include a communication domain and/or a communication node that cause/causes the experience issue. The root cause of the issue object includes a root cause of the experience issue.

Specifically, that the cross-domain MDAS performs the experience issue demarcation based on the first information, and determines the issue object and the root cause of the issue object may include: The cross-domain MDAS sends second information to a single-domain MDAS based on the determined issue object, where the second information indicates the issue object of the experience issue; the single-domain MDAS receives the second information sent by the cross-domain MDAS, and determines the root cause of the issue object based on the second information; and further, the single-domain MDAS sends the root cause of the issue object to the cross-domain MDAS. Correspondingly, the cross-domain MDAS receives the root cause that is of the issue object and that is sent by the single-domain MDAS.

Specifically, for this implementation, refer to the following descriptions of the embodiment corresponding to FIG. 4 or FIG. 5.

The cross-domain MDAS sends the second information to the single-domain MDAS based on the determined issue object. It should be understood that, the single-domain MDAS is a single-domain MDAS of a domain to which the issue object belongs. The single-domain MDAS includes at least one of the following: a core network domain MDAS or a wireless network domain MDAS.

S303: The cross-domain MDAS sends the analytics report to the subscription consumer. Correspondingly, the subscription consumer receives the analytics report.

The analytics report indicates the issue object and/or the root cause of the issue object, and the analytics report may include but is not limited to an issue domain type, the issue object, and a service experience emulation node. The issue domain type indicates a type of the domain to which the issue object belongs, and includes at least one of the terminal side, a transmission side, a service provider side, the wireless network side, and the core network side. The service experience emulation node indicates an improvement degree of user experience after the experience issue is resolved.

Specifically, that the cross-domain MDAS sends the analytics report to the subscription consumer may include: The cross-domain MDAS generates the analytics report based on the root cause that is of the issue object and that is sent by the single-domain MDAS, and sends the analytics report to the subscription consumer. Specifically, for this implementation, refer to the following descriptions of the embodiment corresponding to FIG. 4 or FIG. 5.

According to the method in FIG. 3, the cross-domain MDAS determines the issue object and the root cause of the issue object based on the first information that indicates the information about the experience degradation event, the service access amount, and the service topology of the experience degradation event, to implement demarcation of the issue object for the experience issue through experience issue analysis. In addition, the cross-domain MDAS sends the analytics report to the subscription consumer after determining the issue object and the root cause of the issue object. In this way, the subscription consumer may formulate, based on the analytics report, an optimization policy for resolving the experience issue, to achieve an objective of improving user experience.

In this application, there are two manners for obtaining the first information by the cross-domain MDAS in FIG. 3. In the first manner, the cross-domain MDAS obtains the first information from the data source, where the first information indicates the service topology of the experience degradation event. A specific experience issue demarcation method is shown in FIG. 4.

FIG. 4 shows an experience issue demarcation method according to an embodiment of this application. The experience issue demarcation method includes the following steps.

S401: An MDA subscription consumer (which may be referred to as a subscription consumer for short) sends an analytics request to a cross-domain management data analytics service (which may be referred to as a cross-domain MDAS for short). Correspondingly, the cross-domain management data analytics service receives the analytics request.

The MDA subscription consumer is an apparatus that can consume a management data analytics service, for example, a terminal user subscribing to an MDA or an NF subscribing to the MDA.

The analytics request is used to request an analytics output of service experience analysis from the cross-domain MDAS, and request the cross-domain MDAS to create a managed object instance (managed object instance, MOI) of service experience analysis, and includes but not limited to an MDA type. The managed object instance is an analytics model that is created by the cross-domain MDAS based on different MDA functions and according to protocol conventions and that corresponds to the MDA function, including enabled data and the analytics output.

Specifically, the MDA type indicates that the MDA function is service experience analysis, and indicates the cross-domain MDAS to create a managed object instance of service experience analysis. It should be understood that, the managed object instance of service experience analysis may be referred to as an analytics instance for short.

Optionally, the analytics request further includes a control attribute related to an MDA output. The control attribute related to the MDA output includes a time plan of the MDA output, a geographical area (that is, an area range) of the MDA output, and the like. The time plan of the MDA output includes an analytics start, an analytics end, analytics duration, and the like of the MDA output; and the geographical area of the MDA output indicates a target area of obtaining the MDA output.

For example, the analytics request includes the MDA type, the time plan of the MDA output, and the geographical area of the MDA output. The MDA type indicates that the MDA performs service experience analysis, the time plan of the MDA output indicates that the analytics duration of the MDA output is 15 minutes, and the geographical area of the MDA output indicates that the target area of obtaining the MDA is an area of an identifier of a network slice (network slice ID, NSI_ ID) NSI_2.

S402: The cross-domain MDAS creates the analytics instance based on the analytics request. Then, the cross-domain MDAS sends an analytics request response to the subscription consumer.

The analytics request response is used to confirm, to the subscription consumer, that the analytics instance is successfully created; and carries an identifier of the managed object instance. The identifier of the managed object instance indicates that the managed object instance created by the cross-domain MDAS is the managed object instance of service experience analysis.

The cross-domain MDAS creates the managed object instance based on the MDA type in the analytics request and according to the protocol conventions.

Specifically, the cross-domain MDAS creates the managed object instance of service experience analysis based on the MDA type of service experience analysis in the analytics request. The managed object instance of service experience analysis may be referred to as an analytics instance for short, including the enabled data and the analytics output.

The enabled data of the analytics instance is used to determine the analytics output of service experience analysis, including QoE data. It should be understood that, the enabled data includes but is not limited to the QoE data provided in this solution, other data is allowed to be supplemented to facilitate determining of the analytics output. For detailed information about the QoE data, refer to S403.

The analytics output of the analytics instance indicates specific content of the analytics output, and the specific content is shown in Table 1. It should be understood that, the analytics output includes but is not limited to the analytics output provided in this solution, and other information is allowed to be supplemented to improve the analytics output.

**Table 1**

| Information element | Definition | Support restriction |
|---|---|---|
| Service experience identifier (service experience ID) | Indicates that an analytics report is related to service experience analysis. | Mandatory |
| Service experience issue type (service experience issue type) | Indicates a type of domain to which an issue object belongs, where the issue object includes a communication domain and/or a communication node that cause/causes an experience issue. | Optionally carried |
| | An allowed value is one of enumerated values: | |
| | -Wireless network side | |
| | -Core network side | |
| | -Transmission network side | |
| | -Terminal side | |
| | -Service provider side | |
| | -Combination of a plurality of items | |
| Service experience root cause object (service experience root cause object) | Indicates the issue object of the experience issue. | Optionally carried |
| Service experience emulation (service experience emulation) | Indicates an improvement degree of user service experience after the experience issue is resolved. | Optionally carried |
| Service information (service information) | The field includes service information related to analytics, such as a service name. | Optionally carried |
| | The service information field is used for an MDA MnS producer, and includes a name of an end-to-end service (for example, browsing or video streaming) and detailed information (specific end-to-end service information). | |
| Affected object (affected object) | Object instance to which the service experience applies, for example, a sub-network instance, a network slice instance, or a network slice sub-network instance. The MDA has a cross-domain MDAS and a single-domain MDAS. Therefore, subset values of the field may be different. | Optionally carried |
| Service experience statistics (service experience statistics) | Indicates service experience level statistics on a specific service in a specific time period. For example, there are five levels represented by 1, 2, 3, 4, and 5, where the level 1 indicates that a user is suffering from poor experience, and the level 5 indicates that experience requirements of the user are completely met. | Optionally carried |
| Service experience prediction (service experience prediction) | Indicates prediction of a service experience level of a specific service in a specific time period. | Optionally carried |

In Table 1, the service experience issue type is an optionally carried item in the analytics output. The service experience issue type may also be referred to as an issue domain type, indicates a type of domain to which the issue object belongs, and includes at least one of the terminal side, a transmission side, the service provider side, the wireless network side, and the core network side. It should be understood that, the service experience issue type may include a combination of a plurality of items. When the issue object includes a plurality of different communication domains, or the issue object includes a plurality of communication nodes, but the plurality of communication nodes belong to different communication domains, the service experience issue type includes a combination of a plurality of items.

For example, it is assumed that, an experience issue of a video service is unclear video, and issue objects of unclear video are a UPF 1 and a gNB 1. In this case, the service experience issue type includes the core network side and the wireless network side. Alternatively, an issue object of unclear video is a UPF 1. In this case, the service experience issue type includes the core network side.

In Table 1, the service experience root cause object is the optionally carried item in the analytics output. The service experience issue root cause object may also be referred to as the issue object, and indicates the issue object of the experience issue, including the communication domain and/or the communication node in which the experience issue is generated. For a method for determining the issue object, refer to S404. It should be understood that, the issue object includes at least one communication domain and/or communication node in which the experience issue is generated.

For example, it is assumed that an experience issue of a video service is video freezing, and an issue object of video freezing is a UPF 1. In this case, the service experience root cause object in the analytics output includes the UPF 1. Alternatively, issue objects of video freezing are a UPF 1 and a gNB 1. In this case, the service experience root cause object in the analytics output includes the UPF 1 and the gNB 1.

In Table 1, the service experience emulation is the optionally carried item in the analytics output, and indicates the improvement degree of user service experience after the experience issue is resolved. The improvement degree of user service experience may be quantified by using the service experience level statistics.

For example, it is assumed that an experience issue of a video service is video freezing, and a level of the service experience level statistics is 1, which indicates that the user is suffering from poor experience. The service experience emulation indicates that the level of the service experience level statistics is 5 after video freezing is resolved, which indicates that the experience requirement of the user is completely met.

For detailed descriptions of the service experience identifier, the service information, the affected object, the service experience statistics, and the service experience prediction in Table 1, refer to TS28.104 in the 3GPP protocol.

S403: The cross-domain MDAS sends a subscription request to a data source based on the analytics instance. Correspondingly, the data source sends a subscription response to the cross-domain MDAS.

The data source is configured to provide the QoE data for the cross-domain MDAS, and includes but is not limited to an AF and/or an NWDAF.

Specifically, the AF may exchange data with another NF, and provide a service for a terminal. The NWDAF may collect data from another NF and/or a similar data collection program through subscription or a request model, to provide the QoE data for the cross-domain MDAS. The QoE data indicates data of a subjective feeling of the user on quality and performance of a device, a network and a system, an application, or a service, for example, data such as a delay and traffic.

The subscription request is used to obtain the QoE data. The QoE data includes but is not limited to information about an experience degradation event, a service access amount, and a service topology of the experience degradation event.

The subscription response is used to respond to the subscription request sent by the cross-domain MDAS, and includes the QoE data.

Specifically, specific content of the information about the experience degradation event is shown in Table 2, and includes but is not limited to a service type, a network slice ID, an application ID, an area ID, a user identifier, an event topology node, and an event type. Detailed definitions of the information are as follows.

### (1) Service type (service type)

The service type indicates a type of a service accessed by a terminal user, and includes but is not limited to a video service, a conversational service, a live service, a game service, and the like.

### (2) Network slice ID

The network slice ID indicates an identifier of a network slice that requests to perform experience assurance analysis. A network slice is a new network architecture that provides a plurality of logical networks on a shared network infrastructure, and each logical network serves a specific service type.

### (3) Application ID

The application ID indicates a specific application, and includes a specific name of the application, for example, an application A or an application B.

### (4) Area ID

The area ID indicates a specific area, and includes but is not limited to a name of the area, for example, an area A and an area B.

### (5) User identifier ID

The user identifier ID indicates an identifier of a user, and includes a type of the user identifier and a user identification code.

The type of the user identifier indicates a manner of identifying a user, and includes an international mobile subscriber identification number (international mobile subscriber identification number, IMSI) and a mobile subscriber international integrated services digital network number (mobile subscriber international integrated services digital network number, MSISDN).

Specifically, the IMSI is stored in a subscriber identity module (subscriber identity module, SIM), refers to an ID number of a SIM card, and is valid information for distinguishing a mobile user. The subscriber identity module is also referred to as the SIM card for short. The MSISDN is a unique number for identifying a mobile subscriber in a numbering plan of a public switched telephone network. Simply put, the MSISDN is a mobile number.

The user identification code indicates a number that can accurately identify a user. For different types of user identifiers, the user identification code includes different content.

When the type of the user identifier is the IMSI, the user identification code is a string of decimal digits, with a maximum length of 15 digits, and includes: a mobile country code (mobile country code, MCC) with a length of 3 digits; a mobile network code (mobile nation code, MNC), where a length of the MNC is determined by a value of the MCC and may be 2 or 3 digits; and a mobile subscription identification number (mobile subscription identification number, MSIN), where a value of the MSIN is allocated by a network carrier.

If the type of the user identifier is the MSISDN, the user identification code includes: a country code (country code, CC), where for example, a country code of a country A is 86; a national destination code (national destination code, NDC), where the national destination code is allocated by a communication authority of each country to each network carrier; and for example, destination codes 134 to 139, 150 to 152, 188, and the like are allocated to a carrier A, destination codes 130 to 132, 185 to 186, and the like are allocated to a carrier B, and destination codes 133, 153, 180, 189, and the like are allocated to a carrier C; and a subscriber number (subscriber number, SN), where the subscriber number is allocated by the network carrier.

For example, the type of the user identifier included in the user identifier ID is the IMSI, and the user identification code is 460001234567890.

For example, the type of the user identifier included in the user identifier ID is the MSISDN, and the user identification code is 8613912345678.

### (6) Event topology node

The event topology node is also referred to as the service topology of the experience degradation event, and indicates a communication network topology during user access to the experience degradation event, the communication network topology includes a plurality of communication domains, and each communication domain includes at least one communication node. The event topology node includes a sequence node list. The communication network topology is a specific physical (that is, real) or logical (that is, virtual) arrangement manner between communication nodes that constitute a communication network. The communication node refers to a connection point or a device in the communication network, and is configured to send, receive, or forward data. The communication node may be a hardware device (for example, a router or a base station) or a software entity (for example, an application). The communication domain refers to a range of the communication network. For example, the communication domain may be classified into a wireless network domain, a core network domain, a transmission network domain, a terminal side, and an SP side based on functions of the communication network.

Specifically, the sequence node list includes information about a plurality of communication nodes. The information about the communication node includes: a sequence number (sequence number), a node type, and a node ID.

The sequence number indicates a location of the communication node in the sequence nodes by using a number. For example, a sequence number 1 indicates that the communication node is at the frontmost location in the sequence nodes.

The node type (node type) indicates a type of the communication node, and includes but is not limited to a cell (cell) and a base station (gNB, which is an interface device for a mobile device to access a wireless network). For example, if the node type is the cell, it indicates that the communication node is a cell (where a cell means a radio area controlled by one base station, one base station may manage a plurality of cells, and different cells have different cell IDs).

The node ID (node ID) indicates the communication node. Node IDs of different types of communication nodes include different content, which is determined by carriers to which the communication nodes belong.

For example, if the communication node type is the cell, the node ID is a cell identity (cell identity) code, and a range indicated in a decimal mode is 0 to 65535.

For example, if the communication node type is the base station, the node ID is a location area identification (location area identification, LAI) code, including MCC+MNC+location area code (location area code, LAC). The MCC (mobile country code) is a 3-digit decimal number and ranges from 000 to 999 in a decimal mode. For example, an MCC of a country A is 460. The MNC (mobile network code) is a 2-digit decimal number and ranges from 00 to 99 in a decimal mode. The LAC (location area code) ranges from 1 to 65535.

### (7) Event type

The event type indicates an event type corresponding to the experience degradation event. For different services, there are different event types. For example, for a video service, an event type includes but is not limited to freezing and unclear; and for a conversational service, an event type includes but is not limited to call drop and voice skipping.

**Table 2**

| Item | Meaning | Example |
|---|---|---|
| Service type (service type) | Indicates a type of a service. | Video service, conversational service, and the like |
| Network slice ID (network slice ID, NSI ID) | Indicates an identifier of a network slice that requests to perform experience assurance analysis. | |
| Application ID (application ID, APP ID) | Indicates a specific application. | Application A, application B, and the like |
| Area ID (area ID) | Indicates a specific area. | Area A, area B, and the like |
| User identifier (user ID) | Indicates a specific user. | {Type of the user identifier: MSISDN, user identification code: 8613912345678} |
| Event topology node (event node) | Indicates a communication node during user access to an experience degradation event. | Sequence node list [1-N]: [{sequence number: 1, node type: cell, node ID: 65520}, {sequence number: 2, node type: base station, node ID: 4600065520}, ...] |
| Event type (event type) | Indicates an event type corresponding to the experience degradation event. For different services, there are different event types. | For example, an event type of a conversational service includes but is not limited to a high delay, call drop, and the like. |

Specifically, the service access amount indicates service information of a same service as the experience degradation event, and includes a total quantity of accesses, via the current carrier network, to a same service as a service to which the experience degradation event belongs. Specific content is shown in Table 3, including a service type, an application ID, an area ID, a user identifier, and a topology node.

For detailed definitions of the service type, the application ID, the area ID, and the user identifier, refer to related definitions in Table 2. Details are not described herein again.

The topology node indicates a communication domain and/or a communication node through which a user passes during service access, and includes a sequence node list. The sequence node list includes information about a plurality of communication nodes. The information about the communication node includes a sequence number, a node type, and a node ID. For detailed definitions, refer to related definitions of the sequence node list in the event topology node. Details are not described herein again.

**Table 3**

| Item | Meaning | Example |
|---|---|---|
| Service type (service type) | Indicates a type of a service. | Video service, conversational service, and the like |
| Application ID (application ID, APP ID) | Indicates an application. | Application A, application B, and the like |
| Area ID (area ID) | Indicates a specific area. | Area A, area B, and the like |
| User identifier (user ID) | Indicates a specific user. | {Type of the user identifier: IMSI, user identification code: 460001234567890} |
| Topology node (service node) | Indicates a communication domain and/or a communication node through which a user passes during service access. | Sequence node list [1-N]: [{sequence number: 1, node type: cell, node ID: 65522}, {sequence number: 2, node type: base station, node ID: 4600065521}, ...] |

S404: The cross-domain MDAS performs experience issue demarcation based on the information about the experience degradation event, the service access amount, and the service topology of the experience degradation event that are received, and determines the issue object.

The information about the experience degradation event, the service access amount, and the service topology of the experience degradation event that are received are carried in the subscription response sent by the data source. For details of the information about the experience degradation event, the service access amount, and the service topology of the experience degradation event, refer to S403. Details are not described herein again.

The issue object includes a communication domain and/or a communication node that cause/causes the experience issue.

Specifically, that the cross-domain MDAS performs experience issue demarcation based on the information about the experience degradation event, the service access amount, and the service topology of the experience degradation event, and determines the issue object includes: When an experience degradation event occurs once during user access to a service, each communication node in the event topology node in Table 2 records once poor quality of service. When a user accesses once to a service (including poor quality of service and good quality of service), each communication node in the topology node in Table 3 records once poor quality of service or good quality of service. A poor quality proportion of each communication node may be obtained from records in Table 2 and Table 3. Further, by comparing poor quality proportions of communication nodes, a communication node suspected as the issue object may be preliminarily located. Then, based on a poor quality propagation logic, the issue object may be determined by comparing poor quality conditions between adjacent communication nodes, thereby demarcating the issue object of the experience issue.

Specifically, the poor quality of service means that there is an experience degradation event when the user accesses the service, and the good quality of service means that there is no experience degradation event when the user accesses the service. The poor quality propagation logic exists in statistics on poor quality of service, and means that if a communication node is faulty, there is a high probability that services passing through the communication node are affected. That is, statistics on poor quality can also be collected for a communication node that is adjacent to the communication node and has service interaction with the communication node.

For example, the experience degradation event is video freezing. Table 2 records that video freezing (the experience degradation event) occurs five times. Among event topology node records of the five occurrences of the video freezing, a cell 1 is recorded twice, a gNB 1 is recorded five times, and a UPF 1 is recorded twice. Table 3 records that the video service occurs 10 times. Among topology node records of the 10 occurrences of the video service, the cell 1 is recorded 8 times, the gNB 1 is recorded 10 times, and the UPF 1 is recorded 10 times. It can be learned from the records in Table 2 and Table 3 that, a poor quality proportion of the cell 1 is 0.25, a poor quality proportion of the gNB 1 is 0.5, and a poor quality proportion of the UPF 1 is 0.2. The gNB 1 is preliminarily identified as a communication node suspected to be the issue object. Further, if video services of a cell A, a cell B, and a cell C all pass through the gNB 1, it may be learned from the records in Table 2 and Table 3 that, a poor quality proportion of the cell A is 0.8, a poor quality proportion of the cell B is 0.2, and a poor quality proportion of the cell C is 0.1. If the issue object were the gNB 1, all video services passing through the gNB 1 would be affected. In this case, the poor quality proportions of the cell B and the cell C would be far higher than a current level. Therefore, it can be determined that the issue object is the cell A instead of the gNB 1.

It should be understood that, the foregoing method for determining the issue object by collecting statistics on the poor quality proportion of the communication node and comparing the poor quality conditions between the adjacent communication nodes based on the poor quality propagation logic is to determine the issue object based on manual experience. Determining the issue object (that is, the communication domain and/or the communication node that cause/causes the experience issue) is not limited in this solution, and the issue object may alternatively be determined in another manner.

For example, a model for determining an issue object is established by using a neural network, and information recorded in obtained QoE data is used as input data, for example, a service topology of an experience degradation event, a service access amount of a same service as the experience degradation event, a communication node through which a service in the service access amount passes each time, a service volume carried on each communication node, and a poor quality proportion of each communication node; and an issue object of an experience issue is used as output data. Therefore, the cross-domain MDAS may directly obtain the issue object of the experience issue based on the output of the model.

S405: The cross-domain MDAS sends a root cause request to the single-domain MDAS based on the issue object. Correspondingly, the single-domain MDAS receives the root cause request.

The single-domain MDAS is a single-domain MDAS of a domain to which the issue object belongs, and includes at least one of the following: a wireless network domain MDAS or a core network domain MDAS. For example, the issue object determined in S404 is the gNB 1, and the single-domain MDAS is the wireless network domain MDAS. Alternatively, the issue object determined in S404 is the gNB 1 and the UPF 1, and the single-domain MDAS is the wireless network domain MDAS and the core network domain MDAS.

The root cause request is used by the cross-domain MDAS to request the root cause of the issue object from the single-domain MDAS, and includes the issue object.

For example, the issue object determined in S404 is an AMF 1, and the single-domain MDAS is the core network domain MDAS. Then, the cross-domain MDAS sends the root cause request including the AMF 1 to the core network domain MDAS. Correspondingly, the core network domain MDAS receives the root cause request including the AMF 1.

It should be understood that, S405 is optional. In a case in which the domain to which the issue object belongs is determined as the terminal side and/or the SP side in S404, and related configuration information of the issue object cannot be obtained, an experience issue caused by the terminal side and/or the SP side cannot be resolved through network optimization, and S405 is not performed.

In a case in which the domain of the issue object is determined as the terminal side and/or the SP side in S404, and the related configuration information of the issue object can be obtained, the root cause of the issue object can be further determined based on the obtained related configuration information of the issue object; and/or in a case in which the domain to which the issue object belongs is determined as a RAN domain, a CN domain, or a TN domain in S404, the experience issue can be resolved through network optimization, and S405 is performed.

S406: The single-domain MDAS determines the root cause of the issue object based on the root cause request, and sends the root cause of the issue object to the cross-domain MDAS.

Specifically, that the single-domain MDAS determines the root cause of the issue object based on the root cause request includes: The single-domain MDAS directly reads an issue that exists in the issue object from data such as call history record (call history record, CHR) data and alarm data stored in the single-domain MDAS, where the issue that exists in the issue object includes the root cause of the issue object.

The CHR data is a file or data in the file. The CHR data is written into the file each time a specific event occurs in a device or a controlled application, and a cause of the specific event is recorded. For example, the CHR data can be written when an error occurs in an application and a cause of the error in the application is recorded. Alternatively, the CHR data includes a historical record of all events occurring in the application.

The alarm data is a file or data in the file. The alarm data is written into the file each time an alarm event occurs in a device or a controlled application, and a cause of the alarm event is recorded. For example, the cause of the alarm event recorded in the alarm data is a power alarm or a board load alarm.

For example, the single-domain MDAS is the wireless network domain MDAS, and the issue object is the gNB 1. The wireless network domain MDAS reads, from CHR data and alarm data stored in the wireless network domain MDAS, that an issue that exists in the gNB 1 is the power alarm, the board load alarm, or the like, including the root cause of the gNB 1.

It should be understood that, S406 is optional. When S405 is performed, S406 is performed to determine the root cause of the issue object. When S405 is not performed, in this case, the experience issue cannot be resolved through network optimization, and the root cause of the issue object cannot be further determined, and S406 is not performed.

S407: The cross-domain MDAS receives the root cause of the issue object and generates the analytics report.

The analytics report indicates the issue object and/or the root cause of the issue object. The analytics report includes but is not limited to content in Table 1. For detailed descriptions, refer to S402.

Specifically, the analytics report may optionally include the root cause of the issue object. When S406 is performed and the single-domain MDAS can determine the root cause of the issue object, the analytics report may include the root cause of the issue object. When S406 is not performed and the single-domain MDAS cannot determine the root cause of the issue object, the analytics report does not include the root cause of the issue object.

S408: The cross-domain MDAS sends the analytics report to a notification consumer. Correspondingly, the notification consumer receives the analytics report and forward the analytics report to the subscription consumer.

The notification consumer is configured to forward the analytics report to the subscription consumer, for example, a user terminal, the NF, or an AP.

According to the experience issue demarcation method shown in FIG. 4, the cross-domain MDAS may perform demarcation of the issue object for the experience issue based on the information about the experience degradation event, the service access amount, and the service topology of the experience degradation event that are obtained, and determine the issue object and the root cause of the issue object, so that a subsequent optimization and closure logic can be supported by optimizing the issue object and/or resolving the root cause of the issue object, to achieve an objective of resolving or mitigating the experience issue.

In this application, there are two manners for obtaining the first information by the cross-domain MDAS in FIG. 3. In the second manner, the cross-domain MDAS obtains the information about the experience degradation event and the service access amount; and then the cross-domain MDAS obtains the service topology of the experience degradation event based on the information about the experience degradation event and the service access amount that are obtained, and the managed communication domain and/or communication node, to obtain the first information. A specific experience issue demarcation method is shown in FIG. 5.

FIG. 5 shows an experience issue demarcation method according to an embodiment of this application. The experience issue demarcation method includes the following steps.

Steps S501 and S502 are the same as steps S401 and S402. Details are not described herein again.

S503: A cross-domain MDAS sends a subscription request to a data source based on an analytics instance. Correspondingly, the data source sends a subscription response to the cross-domain MDAS.

The data source is configured to provide QoE data for the cross-domain MDAS, and includes but is not limited to an AF and/or an NWDAF.

Specifically, the AF may exchange data with another NF, and provide a service for a terminal. The NWDAF may collect data from another NF and/or a similar data collection program through subscription or a request model, to provide the QoE data for the cross-domain MDAS. The QoE data indicates data of a subjective feeling of a user on quality and performance of a device, a network and a system, an application, or a service, for example, data such as a delay and traffic.

The subscription request is used to obtain the QoE data, where the QoE data includes information about an experience degradation event and a service access amount.

The subscription response is used to respond to the subscription request sent by the cross-domain MDAS, and includes the information about the experience degradation event and the service access amount.

Specifically, specific content of the information about the experience degradation event and the service access amount is shown in Table 4, and includes but is not limited to: a service type, a network slice ID, an application ID, statistics on a poor quality event proportion of each network element in a wireless network domain, and statistics on a poor quality event proportion of each network element in a core network domain.

**Table 4**

| Item | Meaning | Example |
|---|---|---|
| Service type (service type) | Indicates a type of a service. | Video service, conversational service, and the like |
| Network slice ID (network slice ID, NSI ID) | Indicates an identifier of a network slice that requests to perform experience assurance analysis. | |
| Application ID (application ID, APP ID) | Indicates a specific application. | Application A, application B, and the like |
| Poor quality event proportion of each network element in a wireless network domain | Indicates statistics on the poor quality event proportion of each network element in the wireless network domain, and may be represented by a percentage. | For example, a poor quality event proportion of a cell A is 56%, and a poor quality event proportion of a base station B is 48%. |
| Poor quality event proportion of each network element in a core network domain | Indicates statistics on the poor quality event proportion of each network element in the core network domain, and may be represented by a percentage. | For example, a poor quality event proportion of a UPF 1 is 61%, and a poor quality event proportion of an AMF 1 is 38%. |

The poor quality event proportion of each network element in the wireless network domain indicates statistics on the poor quality event proportion of each network element in the wireless network domain, and may be represented by a percentage. For example, the poor quality event proportion of the cell A is 56%, and the poor quality event proportion of the base station B is 48%.

The poor quality event proportion of each network element in the core network domain indicates statistics on the poor quality event proportion of each network element in the core network domain, and may be represented by a percentage. For example, the poor quality event proportion of the UPF 1 is 61%, and the poor quality event proportion of the AMF 1 is 38%.

For related descriptions of the service type, the network slice ID, and the application ID, refer to S405. Details are not described herein again.

S504: The cross-domain MDAS generates a service topology of the experience degradation event based on the subscription response and a managed network element range.

The subscription response includes the information about the experience degradation event and the service access amount in S503. For detailed descriptions, refer to S503. Details are not described herein again.

Specifically, that the cross-domain MDAS generates the service topology of the experience degradation event includes: A single-domain MDAS restores a single-domain service topology based on a service route policy configuration of a managed network element, and then the cross-domain MDAS splices single-domain service topologies into a complete service topology. The single-domain MDAS includes a wireless network domain MDAS and/or a core network domain MDAS.

For example, the experience degradation event is conversational voice skipping. The wireless network domain MDAS restores, based on a service route policy configuration of a managed network element, a service topology of a current conversational service (where the current conversational service may be understood as a service corresponding to the conversational voice skipping) in the wireless network domain to a cell 1 and a gNB 1. The core network domain MDAS restores, based on the service route policy configuration of the managed network element, a service topology of the current conversational service in the core network domain to an AMF 1, an SMF 1, and a UPF 1. Then, the cross-domain MDAS splices the service topology in the wireless network domain and the service topology in the core network domain to obtain a complete service topology of the experience degradation event, including the cell 1, the gNB 1, the AMF 1, the SMF 1 and the UPF 1.

It should be understood that, in the manner in which the cross-domain MDAS generates the service topology of the experience degradation event, the service topology in the wireless network domain and/or the service topology in the core network domain may be restored, so that experience issue demarcation is subsequently performed, and an issue object and a root cause of the issue object are determined in a network of the wireless network domain and/or a network of the core network domain.

Steps S505 to S509 are the same as steps S404 to S408. Details are not described herein again.

According to the experience issue demarcation method shown in FIG. 5, the service topology of the experience degradation event is obtained without depending on the single-domain MDAS, and the service topology of the experience degradation event is generated based on the network element range managed by the cross-domain MDAS, thereby reducing processing complexity of the cross-domain MDAS and improving efficiency of obtaining the service topology of the experience degradation event. Further, the cross-domain MDAS performs demarcation of the issue object for an experience issue based on the information about the experience degradation event and information about the service access amount that are obtained, and the generated service topology of the experience degradation event, and determines the issue object and the root cause of the issue object, thereby supporting subsequent optimization and closure of the issue.

The foregoing mainly describes the solutions provided in embodiments of this application from a perspective of interaction between each network element and device. It may be understood that, to implement the foregoing functions, each network element and device, for example, a subscription consumer, a notification consumer, a cross-domain MDAS, a single-domain MDAS, and a data source, include corresponding hardware structures and/or software modules for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware in a manner of hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the subscription consumer, the notification consumer, the cross-domain MDAS, the single-domain MDAS, the data source, and the like may be grouped based on the foregoing method examples. For example, each functional module may be grouped corresponding to each function, or two or more functions may be integrated into one processing module. The integrated module may be implemented in a form of hardware, or may be implemented in a form of a software functional module. It should be noted that, in embodiments of this application, module grouping is an example and is merely logical function grouping. During an actual implementation, there may be another grouping manner.

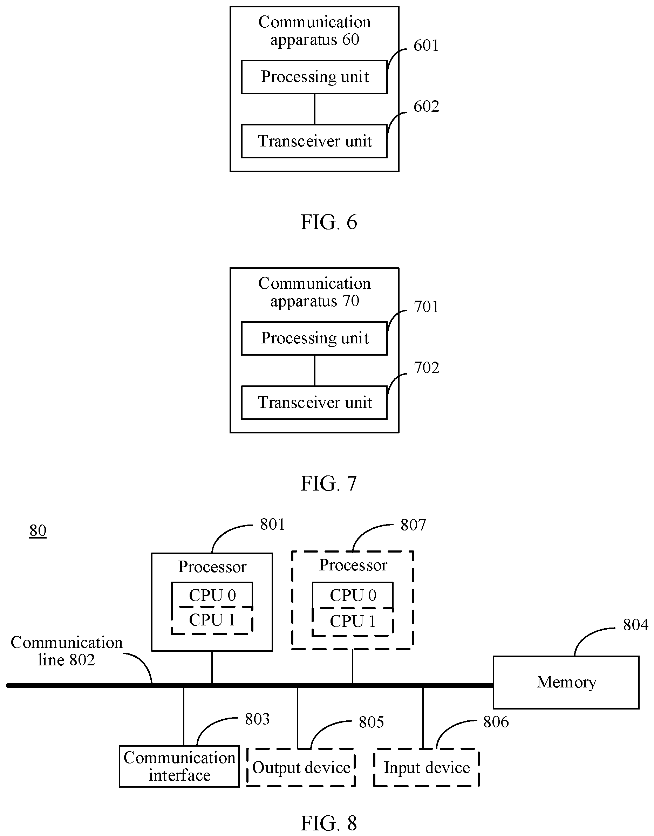

FIG. 6 shows a diagram of a communication apparatus 60. The communication apparatus 60 may be configured to perform the function of the cross-domain MDAS (or referred to as the cross-domain MDAS, or referred to as the cross-domain management data analytics service) in the foregoing embodiments. In a possible implementation, the communication apparatus 60 shown in FIG. 6 includes a processing unit 601 and a transceiver unit 602.

The processing unit 601 is configured to obtain first information, perform experience issue demarcation based on the first information, and determine an issue object and a root cause of the issue object. For example, the processing unit 601 may be configured to support the communication apparatus 60 in performing S403, S404, and S407, or performing S503, S504, S505, and S508.

The transceiver unit 602 is configured to send an analytics report to a subscription consumer, and the analytics report indicates the issue object and/or the root cause of the issue object. For example, the sending unit 602 may support the communication apparatus 60 in performing S408 or S509.

For related descriptions of the first information, the issue object, the root cause of the issue object, and the analytics report, refer to the descriptions in the foregoing method embodiments.

Specifically, all related content of the steps in the foregoing method embodiments shown in FIG. 4 and FIG. 5 may be cited in function descriptions of the corresponding functional modules. Details are not described herein again. The communication apparatus 60 is configured to perform the function of the cross-domain MDAS in the experience issue demarcation method shown in FIG. 4 or FIG. 5, and therefore may achieve the same effect as the foregoing experience issue demarcation method.

In another possible implementation, the communication apparatus 60 shown in FIG. 6 includes a processing module and a communication module. The processing module is configured to control and manage an action of the communication apparatus 60. For example, the processing module may integrate the function of the processing unit 601, may be configured to support the communication apparatus 60 in performing S403, S404, and S407, or may be configured to support the communication apparatus in performing S503, S504, S505, S508, and another process of the technology described in this specification. The communication module may integrate the function of the transceiver unit 602, may be configured to support the communication apparatus 60 in performing S408, or may be configured to support the communication apparatus 60 in performing S509 and communicating with another network entity, for example, communicating with a functional module or a network entity shown in FIG. 4 and FIG. 5. The communication apparatus 60 may further include a storage module. The storage module is configured to store program code and data of the communication apparatus 60.

FIG. 7 shows a diagram of a communication apparatus 70. The communication apparatus 70 may be configured to perform the function of the single-domain MDAS (or referred to as the single-domain management data analytics service) in the foregoing embodiments. In a possible implementation, the communication apparatus 70 shown in FIG. 7 includes a processing unit 701 and a transceiver unit 702.

The processing unit 701 is configured to obtain second information that indicates an issue object of an experience issue, and determine a root cause of an issue object based on the second information. For example, the processing unit 701 may be configured to support the communication apparatus 70 in performing S405 and S406, or may be configured to support the communication apparatus 70 in performing S506 and S507.

The transceiver unit 702 is configured to send the root cause of the issue object to a cross-domain management data analytics service. For example, the transceiver unit 702 may support the communication apparatus 70 in performing S406 or S507.

For related descriptions of the second information, the root cause of the issue object, and the cross-domain management data analytics service (which may also be referred to as a cross-domain MDAS), refer to the descriptions in the foregoing method embodiment.

Specifically, all related content of the steps in the foregoing method embodiments shown in FIG. 4 and FIG. 5 may be cited in function descriptions of the corresponding functional modules. Details are not described herein again. The communication apparatus 70 is configured to perform the function of the single-domain MDAS in the experience issue demarcation method shown in FIG. 4 or FIG. 5, and therefore may achieve the same effect as the foregoing experience issue demarcation method.

In another possible implementation, the communication apparatus 70 shown in FIG. 7 includes a processing module and a communication module. The processing module is configured to control and manage an action of the communication apparatus 70. For example, the processing module may integrate the function of the processing unit 701, may be configured to support the communication apparatus 70 in performing S405 and S406, or performing S506 and S507, and another process of the technology described in this specification. The communication module may integrate the function of the transceiver unit 702, may be configured to support the communication apparatus 70 in performing S406 or S507, and communicating with another network entity, for example, communicating with a functional module or a network entity shown in FIG. 4 and FIG. 5. The communication apparatus 70 may further include a storage module. The storage module is configured to store program code and data of the communication apparatus 70.

As mentioned above, the processing module may be a processor or a controller. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communication module may be a transceiver circuit, a communication interface, or the like. The storage module may be a memory. When the processing module is the processor, the communication module is the communication interface, and the storage module is the memory, the communication apparatus 60 and the communication apparatus 70 in embodiments of this application may be the communication apparatus 80 shown in FIG. 8. For example, the cross-domain MDAS and the single-domain MDAS may use a composition structure shown in FIG. 8 or include components shown in FIG. 8. FIG. 8 is a diagram of a composition of a communication apparatus 80 according to an embodiment of this application. As shown in FIG. 8, the communication apparatus 80 may include a processor 801, a communication line 802, and a communication interface 803.

Further, the communication apparatus 80 may further include a memory 804. The processor 801, the memory 804, and the communication interface 803 may be connected to each other through the communication line 802.

The processor 801 may be a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. The processor 801 may alternatively be another communication apparatus having a processing function, for example, a circuit, a device, or a software module.

The communication line 802 is configured to transfer information between components included in the communication apparatus 80.

The communication interface 803 is configured to communicate with another device or another communication network. The another communication network may be Ethernet, a radio access network (radio access network, RAN), a wireless local area network (wireless local area network, WLAN), or the like. The communication interface 803 may be a radio frequency module, a transceiver, or any communication apparatus that can implement communication. In embodiments of this application, an example in which the communication interface 803 is the radio frequency module is used for description. The radio frequency module may include an antenna, a radio frequency circuit, and the like. The radio frequency circuit may include a radio frequency integrated chip, a power amplifier, and the like.

The memory 804 is configured to store instructions. The instructions may be computer programs.

The memory 804 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another optical disc storage, an optical disc storage, a magnetic disk storage medium, or another magnetic storage device. The optical disc storage includes a compact optical disc, a laser disc, an optical disc, a digital general-purpose disc, a Blu-ray disc, or the like.

It should be noted that, the memory 804 may exist independently of the processor 801, or may be integrated with the processor 801. The memory 804 may be configured to store instructions, program code, some data, or the like. The memory 804 may be located in the communication apparatus 80, or may be located outside the communication apparatus 80. This is not limited. The processor 801 is configured to execute the instructions stored in the memory 804, to perform a communication method provided in the following embodiment of this application.

In an example, the processor 801 may include one or more CPUs, for example, a CPU 0 and a CPU 1 in FIG. 8.

In an optional implementation, the communication apparatus 80 includes a plurality of processors. For example, in addition to the processor 801 in FIG. 8, the communication apparatus 80 may further include a processor 807.

In an optional implementation, the communication apparatus 80 further includes an output device 805 and an input device 806. The input device 806 is a keyboard, a mouse, a microphone, a joystick, or the like, and the output device 805 is a device like a display or a speaker (speaker).

It should be noted that, the communication apparatus 80 may be a desktop computer, a portable computer, a network server, a mobile phone, a tablet computer, a wireless terminal, an embedded device, a chip system, or a device having a structure similar to that in FIG. 8. In addition, the composition structure shown in FIG. 8 does not constitute a limitation on the communication apparatus. In addition to the components shown in FIG. 8, the communication apparatus may include more or fewer components than those shown in FIG. 8, or some components may be combined, or there may be a different component layout.

In this embodiment of this application, the chip system may include a chip, or may include a chip and another discrete device.

An embodiment of this application further provides a computer-readable storage medium. All or a part of the processes in method embodiments may be implemented by a computer program instructing relevant hardware. The program may be stored in the computer-readable storage medium. When the program runs, the processes of the methods in embodiments may be included. The computer-readable storage medium may be a terminal in any one of the foregoing embodiments, for example, an internal storage unit including a data transmit end and/or a data receive end, such as a hard disk drive or a memory of the terminal. Alternatively, the computer-readable storage medium may be an external storage device of the terminal, for example, a plug-in hard disk drive, a smart media card (smart media card, SMC), a secure digital (secure digital, SD) card, a flash card (flash card), or the like that are configured on the terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be understood that, collection, storage, use, processing, transmission, provision, disclosure, and the like of personal user information in the technical solutions of this application all comply with related laws and regulations, and do not violate public order and good morals. For example, in the technical solutions in this application, the personal user information is processed with user authorization. This is uniformly described herein and is not described below.

It should be noted that, the terms "first", "second", and the like in the specification, claims, and accompanying drawings of this application are intended to distinguish between different objects, but are not intended to describe a specific order. In addition, the terms "include" and "have" and any other variants thereof are intended to cover a non-exclusive inclusion. For example, a process, a method, a system, a product, or a device that includes a series of steps or units is not limited to the steps or units that are listed, but optionally further includes the steps or units that are not listed, or optionally further includes other inherent steps or units of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

It should be understood that, in embodiments of this application, "B corresponding to A" indicates that B is associated with A. For example, B may be determined based on A. It should be further understood that, determining B based on A does not mean that B is determined based only on A. B may alternatively be determined based on A and/or other information. In embodiments of this application, "connection" means various connection manners such as a direct connection or an indirect connection, for implementing communication between devices. This is not limited in embodiments of this application.

Unless otherwise specified, in embodiments of this application, "transmission" (transmit/transmission) refers to bidirectional transmission, and includes a sending action and/or a receiving action. Specifically, in embodiments of this application, "transmission" includes data sending, data receiving, or data sending and data receiving. In other words, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

Based on the foregoing descriptions of implementations, a person skilled in the art may clearly understand that, for the purpose of convenient and brief description, grouping of the foregoing functional modules is used as an example for illustration. In actual application, the foregoing functions can be allocated to different functional modules and implemented based on a requirement, that is, an internal structure of an apparatus is grouped into different functional modules to implement all or some of the functions described above.

In the several embodiments provided in this application, it may be understood that, the disclosed communication apparatus and method may be implemented in other manners. For example, the described communication apparatus embodiments are merely examples. For example, the grouping of modules or units is an example and is merely logical function grouping. During an actual implementation, there may be another grouping manner. For example, a plurality of units or components may be combined or integrated into another apparatus, or some features may be ignored or may not be performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may be or may not be physically separate, and parts displayed as units may be one or more physical units, may be located in one place, or may be distributed on different places. A part or all of the units may be selected based on an actual requirement to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, and includes several instructions for instructing a device, for example, a single-chip microcomputer or a chip, or a processor (processor) to perform all or some of the steps of the methods in embodiments of this application. The foregoing storage medium includes any medium that stores program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An experience issue demarcation method, wherein the method comprises:
obtaining first information, wherein the first information indicates information about an experience degradation event, a service access amount, and a service topology of the experience degradation event; the experience degradation event comprises an event that occurs during an event of service access performed via a current carrier network and that has an experience issue, and the experience issue comprises that access experience does not meet a preset experience requirement; the service access amount comprises a total quantity of accesses, via the current carrier network, to a same service as a service to which the experience degradation event belongs; and the service topology of the experience degradation event indicates a communication network topology during user access to the experience degradation event, the communication network topology comprises a plurality of communication domains, and each communication domain comprises at least one communication node;
performing experience issue demarcation based on the first information, and determining an issue object and a root cause of the issue object, wherein the issue object comprises a communication domain and/or a communication node that cause/causes the experience issue; and
sending an analytics report to a subscription consumer, wherein the analytics report indicates the issue object and/or the root cause of the issue object.

2. The method according to claim 1, wherein
performing the experience issue demarcation based on the first information, and determining the issue object and the root cause of the issue object comprises:
sending second information to a single-domain management data analytics service, wherein the second information is used to determine the root cause of the issue object; and
generating the analytics report based on the root cause that is of the issue object and that is sent by the single-domain management data analytics service.

3. The method according to claim 1, wherein the obtaining the service topology of the experience degradation event comprises:
obtaining the first information; and
obtaining the service topology of the experience degradation event based on the first information and a managed communication domain and/or communication node.

4. The method according to claim 1, wherein the obtaining the service topology of the experience degradation event comprises:
sending a subscription request to a data source, wherein the subscription request is used to request the first information from the data source; and
receiving a subscription response from the data source, wherein the subscription response comprises the first information.

5. The method according to any one of claims 1 to 4, wherein
the information about the experience degradation event comprises at least one of the following: a service type to which the experience degradation event belongs, an identifier of a network slice in which the experience degradation event occurs, an application identifier corresponding to the experience degradation event, an identifier of an area in which the experience degradation event occurs, an identifier of a user to which the experience degradation event occurs, a service topology node of the experience degradation event, or an event type of the experience degradation event;
the service access amount comprises at least one of the following: a service type, an application identifier, an area identifier, a user identifier, or a service topology node; and
the single-domain management data analytics service comprises at least one of the following: a core network domain management data analytics service or a wireless network domain management data analytics service.

6. The method according to any one of claims 1 to 5, wherein
the analytics report comprises at least one of the following: an issue domain type, the issue object, or a service experience emulation node, wherein
the issue domain type indicates a type of domain to which the issue object belongs, and comprises at least one of a terminal side, a transmission side, a service provider side, a wireless network side, and a core network side; and
the service experience emulation node indicates an improvement degree of user experience after the experience issue is resolved.

7. An experience issue demarcation method, wherein the method comprises:
obtaining second information, wherein the second information indicates an issue object of an experience issue;
determining a root cause of the issue object based on the second information; and
sending the root cause of the issue object to a cross-domain management data analytics service.

8. A communication apparatus, wherein the communication apparatus is used in a cross-domain management analytics service, and the communication apparatus comprises:
a processing unit, configured to obtain first information, perform experience issue demarcation based on the first information, and determine an issue object and a root cause of the issue object; and
a transceiver unit, configured to send an analytics report to a subscription consumer, wherein the analytics report indicates the issue object and/or the root cause of the issue object.

9. A communication apparatus, wherein the communication apparatus comprises a processor and a communication interface, and the processor and the communication interface are configured to support the communication apparatus in performing the experience issue demarcation method according to any one of claims 1 to 6.

10. A communication apparatus, wherein the communication apparatus is used in a single-domain management analytics service, and the communication apparatus comprises:
a processing unit, configured to obtain second information, and determine a root cause of an issue object based on the second information; and
a transceiver unit, configured to send the root cause of the issue object to a cross-domain management data analytics service.

11. A communication apparatus, wherein the communication apparatus comprises a processor and a communication interface, and the processor and the communication interface are configured to support the communication apparatus in performing the experience issue demarcation method according to claim 7.

12. A communication system, wherein the communication system comprises the communication apparatus according to claim 8 or 9, or the communication system comprises the communication apparatus according to claim 10 or 11.

13. A computer-readable storage medium, wherein the computer-readable storage medium stores computer instructions, and when the computer instructions are run on a computer, the computer is caused to perform the method according to any one of claims 1 to 6, or the computer is caused to perform the method according to claim 7.

14. A computer program product, wherein the computer program product comprises computer instructions, and when the computer instructions are run on a computer, the computer is caused to perform the method according to any one of claims 1 to 6, or the computer is caused to perform the method according to claim 7.
